# EUROPEAN PATENT SPECIFICATION

(11) **EP 2 893 440 B1**
(45) Date of publication and mention of the grant of the patent: **26.10.2016**
(21) Application number: 13835946.8
(22) Date of filing: 03.09.2013
(51) Int. Cl.: G06F 9/445, G06F 17/30

(54) **METHOD AND APPARATUS FOR RUNNING A COMPUTER FILE**
VERFAHREN UND VORRICHTUNG ZUM AUSFÜHREN EINER RECHNERDATEI
PROCÉDÉ ET APPAREIL POUR EXÉCUTER UN FICHIER INFORMATIQUE

(30) Priority: 10.09.2012 CN 201210332045
(43) Date of publication of application: 15.07.2015
(73) Proprietor: Tencent Technology (Shenzhen) Co., Ltd, Guangdong 518000 (CN)
(72) Inventor: FU, Qikang, Shenzhen Guangdong 518000 (CN)
(74) Representative: Awapatent AB
(86) International application number: PCT/CN2013/082858
(87) International publication number: WO 2014/036929

(56) References cited:
- CN-A- 101 127 067
- US-A1- 2008 320 379
- US-B1- 6 513 153

## Description

### FIELD

The present disclosure relates to information processing techniques, and more particularly, to a method and an apparatus for running a computer file.

### BACKGROUND

A computer file is a segment of data stream stored on a non-transitory storage medium, such as a hard disk, a CD-ROM, or any other form of non-transitory storage medium known in the art. Generally, computer files include text files, image files, video files, executable files (programs), batch files, dynamic link libraries, driver files, etc. Each file usually has a file name extension, such as .exe, .sys, .com.

Users may want different computer files have different running time and running manners. For example, for different kinds of multimedia files, the user may want to open them using different media player application programs. In addition, the user may hope that a dial-up connection program automatically runs when computer boots and cache files and navigation histories are automatically cleaned up when the computer is shut down.

US 6513153 B1 provides a method for automatically integrating and executing application software modules. An application selects those software modules from a pool of software modules that match a particular criteria. If the software module is configured so that it may be run by the application, then the application runs the software module. A software module invokes an application-supplied function that provides an output buffer. The software module may generate HTML code and store the code in the output buffer.

### SUMMARY

According to an example of the present disclosure, a computer-implemented method for running a computer file is provided, so as to increase a file processing efficiency. The method includes:
parsing running information of a computer file, wherein running information is configured for each computer file in a computer system and each computer file is opened or executed independently according to its running information; if the computer file is an executable computer file, the running information comprises a trigger condition and a running manner of the executable computer file, and if the computer file is a non-executable computer file, the running information comprises a first opening manner and a second opening manner of the non-executable computer file;
if the computer file is the executable computer file,
obtaining the trigger condition and the running manner of the executable computer file; executing the executable computer file according to the running manner if the trigger condition is met; wherein the running manner of the executable computer file indicates a running priority of the executable computer file and/or a background/foreground running of the executable computer file; and
if the computer file is the non-executable computer file,
obtaining the first opening manner and the second opening manner of the non-executable computer file; and
opening the non-executable computer file according to the first opening manner and configuring the second opening manner as a default opening manner of other non-executable computer files of a same file type with the non-executable computer file.

According to another example of the present disclosure, an apparatus for running a computer file is provided, so as to increase a file processing efficiency. The apparatus includes:
one or more processors;
a memory; and
one or more program units stored in the memory and to be executed by the one or more processors, the one or more program units comprise:
   a running information configuring unit, to configure running information for each computer file in a computer system, wherein each computer file is opened or executed independently according to its running information; if the computer file is an executable computer file, the running information comprises a trigger condition and a running manner of the executable computer file, if the computer file is a non-executable computer file, the running information comprises a first opening manner and a second opening manner of the non-executable computer file;
   a running information parsing unit, to parse the running information of the executable computer file to obtain the trigger condition and the running manner of the executable computer file if the computer file is the executable computer file; and obtain the first opening manner and the second opening manner of the non-executable computer file if the computer file is the non-executable computer file; and
   a computer file running unit, to
   open the non-executable computer file according to the first opening manner and configure the second opening manner as a default opening manner of other non-executable computer files of a same file type with the non-executable computer file if the computer file is the non-executable computer file; and
   execute the executable computer file according to the running manner if the trigger condition is met and if the computer file is the executable computer file;
   wherein the running manner of the executable computer file indicates a running priority of the executable computer file and/or a background/foreground running of the executable computer file.

According to still another example of the present disclosure, a non-transitory computer-readable storage medium comprising a set of instructions for running a computer file is provided, the set of instructions to direct at least one processor to perform acts of:
parsing running information of a computer file, wherein running information is configured for each computer file in a computer system and each computer file is opened or executed independently according to its running information; of the computer file is an executable computer file, the running information comprises a trigger condition and a running manner of the executable computer file, and if the computer file is a non-executable computer file, the running information comprises a first opening manner and a second opening manner of the non-executable computer file;
if the computer file is the executable computer file,
obtaining the trigger condition and the running manner of the executable computer file; executing the executable computer file according to the running manner if the trigger condition is met; wherein the running manner of the executable computer file indicates a running priority of the executable computer file and/or a background/foreground running of the executable computer file; and
if the computer file is the non-executable computer file,
obtaining the first opening manner and the second opening manner of the non-executable computer file; and
opening the non-executable computer file according to the first opening manner and configuring the second opening manner as a default opening manner of other computer files of a same file type with the non-executable computer file.

Other aspects or embodiments of the present disclosure can be understood by those skilled in the art in light of the description, the claims, and the drawings of the present disclosure.

### BRIEF DESCRIPTION OF THE DRAWINGS

Features of the present disclosure are illustrated by way of example and not limited in the following figures, in which like numerals indicate like elements, in which:
FIG. 1 is a schematic diagram illustrating an example of a user device 100 for executing the method of the present disclosure.
FIG. 2 is a schematic diagram illustrating a method for running a computer file according to an example of the present disclosure.
FIG. 3 is a flowchart of configuring running information according to an example of the present disclosure.
FIG. 4 is a flowchart of running a computer file according to an example of the present disclosure.
FIG. 5 is a schematic diagram illustrating an apparatus for running a computer file according to an example of the present disclosure.

### DETAILED DESCRIPTION

The preset disclosure will be described in further detail hereinafter with reference to accompanying drawings and examples to make the technical solution and merits therein clearer.

For simplicity and illustrative purposes, the present disclosure is described by referring to examples. In the following description, numerous specific details are set forth in order to provide a thorough understanding of the present disclosure. It will be readily apparent however, that the present disclosure may be practiced without limitation to these specific details. In other instances, some methods and structures have not been described in detail so as not to unnecessarily obscure the present disclosure. As used herein, the term "includes" means includes but not limited to, the term "including" means including but not limited to. The term "based on" means based at least in part on. In addition, the terms "a" and "an" are intended to denote at least one of a particular element.

Conventional operating systems usually have a plan task program which can run a computer file at a specific time. However, the plan task program of the conventional operating systems only has a simple running time. It does not consider complex requirements in a practical application. For example, the following trigger conditions are not available: computer shut-down, usage of system space or memory exceeding a threshold, etc. In addition, the plan task program requires complicated operations, which is not fit for most users.

Furthermore, in conventional systems, files with the same file name extension will be configured with the same designated opening manner. Thus, these files can only be opened using the designated opening manner, which is inconvenient for users, increases system resource occupation and decreases a file processing efficiency. In addition, different application programs may change the opening manners of the computer files back and forth according to their own requirements, which also bring much inconvenience to users.

In contrast to this, in an example of the present disclosure, running information may be configured for each computer file in a computer system and each computer file may be opened or executed independently according to its running information.

In particular, the running information may include a trigger condition and a running manner of the computer file. Or, the running information may include a first opening manner for opening the computer file and a second opening manner for opening other computer files of the same file type with the this computer file.

In case that the running information includes a trigger condition and a running manner, if the trigger condition is met, the computer file is executed according to the running manner configured by the user.

In case that the running information includes a first opening manner and a second opening manner, the first opening manner configured by the user may be used for opening the computer file and the second opening manner may be configured as a default opening manner of other computer files of the same file type with this computer file.

Through the method of the present disclosure, each computer file may be opened or executed according to the running information defined by the user independently. In addition, computer files of the same file type may be opened according to different opening manners, which reduces system resource occupation and increases file processing efficiency.

Hereinafter, the preset disclosure will be described in further detail with reference to accompanying drawings and examples.

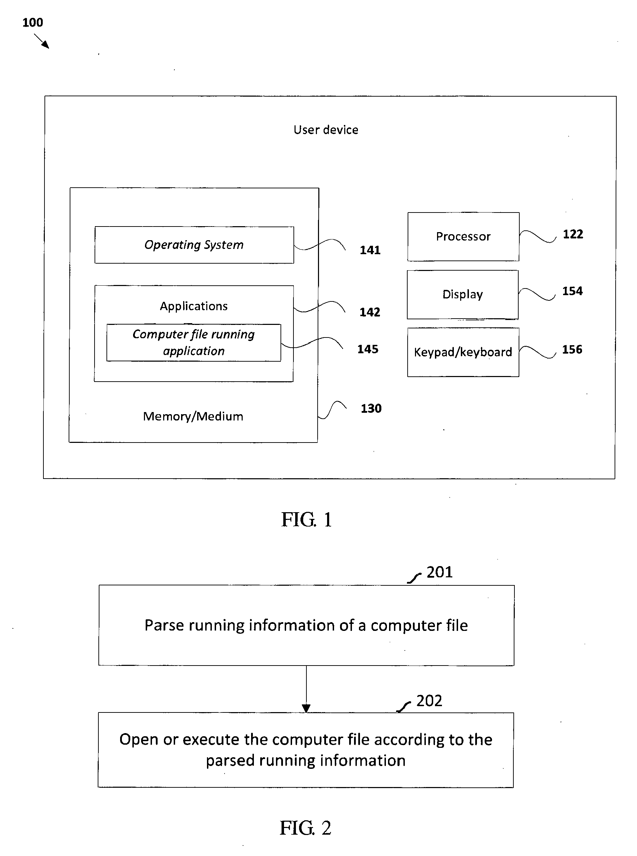

FIG. 1 is a schematic diagram illustrating an example of a user device 100 which may execute the method of the present disclosure. As shown in FIG. 1, the user device 100 may be a computing device capable of executing the method and apparatus of present disclosure. The user device 100 may, for example, be a device such as a personal desktop computer or a portable device, such as a laptop computer, a tablet computer, a cellular telephone, or a smart phone.

The user device 100 may vary in terms of capabilities or features. Claimed subject matter is intended to cover a wide range of potential variations. The user device 100 may include or may execute a variety of operating systems 141. The user device 100 may include or may execute a variety of possible applications 142, such as a computer file running application 145 executable by a processor to implement the method provided by the present disclosure. The user device 100 may also include a keypad/keyboard 156 and a display 154.

Further, the user device 100 may include one or more non-transitory processor-readable storage media 130 and one or more processors 122 in communication with the non-transitory processor-readable storage media 130. For example, the non-transitory processor-readable storage media 130 may be a RAM memory, flash memory, ROM memory, EPROM memory, EEPROM memory, registers, hard disk, a removable disk, a CD-ROM, or any other form of non-transitory storage medium known in the art. The one or more non-transitory processor-readable storage media 130 may store sets of instructions, or units and/or modules that comprise the sets of instructions, for conducting operations described in the present application. The one or more processors may be configured to execute the sets of instructions and perform the operations in examples of the present application.

FIG. 2 is a schematic diagram illustrating a method for running a computer file according to an example of the present disclosure. FIG. 2 is a simplified diagram according to one embodiment of the present invention. This diagram is merely an example, which should not unduly limit the scope of the claims. One of ordinary skill in the art would recognize many variations, alternatives, and modifications.

As shown in FIG. 2, the method includes the following.

At block 201, running information of a computer file is parsed.

In this block, the running information of the computer file may be parsed by a computer system using an application program such as the computer file running application 145 shown in FIG. 1.

In one example, the running information may include a trigger condition, a first running manner of the computer file and a second running manner of other computer files of the same file type with this computer file. When the trigger condition is met, the computer file runs according to the first running manner and the second running manner is applied to other computer files of the same file type with this computer file. The first running manner and the second running may indicate a detailed application program for opening the computer file.

In another example, since computer files generally include executable computer files and non-executable computer files, in one example, contents in the running information may be different for an executable computer file and a non-executable computer file.

If the computer file is an executable computer file, the running information may include a trigger condition and a running manner. Thus, the trigger condition and the running manner may be obtained through parsing the running information. If the trigger condition is met, the executable computer file is executed according to the running manner which indicates a running priority and/or background/foreground running of the executable computer file.

If the computer file is a non-executable computer file, the running information may include a first opening manner and a second opening manner. Thus, the first opening manner and the second opening manner may be obtained through parsing the running information. The first opening manner indicates an application program for opening the non-executable computer file. The second opening manner indicates an application program for opening other non-executable computer files of the same file type with this non-executable computer file.

In addition, the parsing of the running information may be initiated differently with respect to the executable computer file and the non-executable computer file. For the executable computer file, the parsing may be initiated when the computer file running application 145 is started. For the non-executable computer file, the parsing may be initiated when the non-executable computer file is to be opened.

At block 202, the computer file is opened or executed according to the parsed running information.

In this example, in case that the running information includes a trigger condition, a first running manner and a second running manner, it is determined whether the trigger condition is met. If the trigger condition is met, the computer file runs according to the first running manner, and the second running manner is applied to other computer files of the same file type with this computer file.

In case that the running information includes a trigger condition and a running manner, it is determined whether the trigger condition is met. If the trigger condition is met, the computer file is executed according to the running manner.

In case that the running information includes a first opening manner and a second opening manner, the computer file will be opened according to the first opening manner, and the second opening manner is configured as a default opening manner of other computer files of the same file type with this computer file.

It should be noted that, before the above block 201, the running information should be configured by a user in the computer system in advance. Hereinafter, the configuration of the running information will be described.

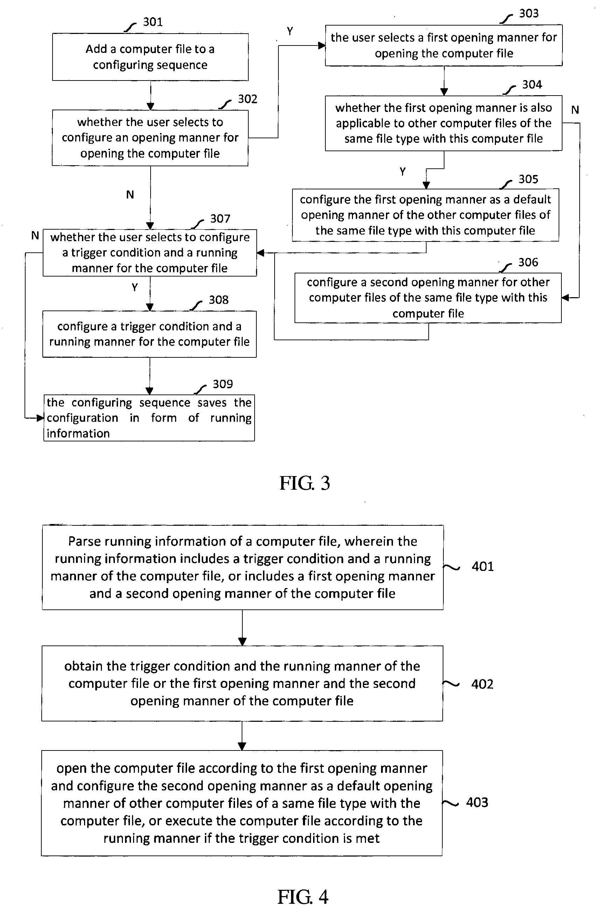

FIG. 3 is a flowchart illustrating the configuration of the running information according to an example of the present disclosure. FIG. 3 is a simplified diagram according to one embodiment of the present invention. This diagram is merely an example, which should not unduly limit the scope of the claims. One of ordinary skill in the art would recognize many variations, alternatives, and modifications.

As shown in FIG. 3, the configuration procedure includes the following.

At block 301, a computer file is added to a configuring sequence, wherein the configuring sequence may be a computer thread used for configuring the running information of computer files.

At block 302, it is determined whether the user selects to configure an opening manner for opening the computer file, if yes, block 303 is performed; otherwise, block 307 is performed.

In this block, if the computer file is a non-executable computer file, the user may select an opening manner for opening the non-executable computer file.

At block 303, the user selects a first opening manner for opening the computer file.

At block 304, the user determines whether the first opening manner is also applicable to other computer files of the same file type with this computer file, if yes, block 305 is performed; otherwise, block 306 is performed.

At block 305, the first opening manner is configured as a default opening manner of the other computer files of the same file type with this computer file, i.e., the first opening manner is used for opening this computer file and other computer files of the same file type with this computer file, and then block 307 is performed.

At block 306, a second opening manner is configured for other computer files of the same file type with this computer file.

The first opening manner and the second opening manner may be the same or different. That is to say, the user may select a program or use a default program to open the computer file and other computer files of the same file type with this computer file. Or, the user may select a program or use a default program to open merely this computer file each time.

At block 307, it is determined whether the user selects to configure a trigger condition and a running manner for the computer file. If yes, block 308 is performed; otherwise, block 309 is performed.

In this block, if the computer file is an executable computer file, the user may select to configure a trigger condition and a running manner for the executable computer file.

At block 308, a trigger condition and a running manner are configured for the computer file.

Herein, there may be various kinds of trigger conditions, e.g., trigger conditions related to computer system startup, trigger conditions related to time, trigger conditions related to a designated folder, etc.

Hereinafter, some trigger conditions are described.
(1) Computer system startup: including computer power-on, user logging on computer system, etc. For example, if the computer system boots, it is determined that the trigger condition is met.
(2) Computer system startup complete: including system startup complete, i.e., startup services and startup items having been started. If the computer system startup completes, it is determined that the trigger condition is met.
(3) A time period after the computer system startup completes: including after several seconds, minutes or hours after the computer system startup completes. If the predetermined time period has elapsed after the computer system startup completes, it is determined that the trigger condition is met.
(4) Computer system power-down: including user logging off, computer restart, etc. When the computer system powers down, it is determined that the trigger condition is met.
(5) Designated time: including one or more time in one day, e.g., 7:20. When the designated time arrives, it is determined that the trigger condition is met.
(6) Designated running time interval: including running every certain seconds, minutes, hours or days. When the designated running time interval arrives, it is determined that the trigger condition is met.
(7) A day or some days of a week: including a certain day of the week. When the day of the week comes, it is determined that the trigger condition is met.
(8) A date or some dates of a month: including a certain date of the month. When the date comes, it is determined that the trigger condition is met.
(9) A certain program is closed: including closing of a browser. When a certain program is closed, it is determined that the trigger condition is met. At this time, it is possible to run garbage and trace cleanup script or software to clean up browsing histories automatically.
(10) Files in a designated folder become too much or a file is too big: if files in a designated folder become too much or a file in the designated folder is too big, it is determined that the trigger condition is met.
(11) Computer system idle: it is possible to scan the system at regular times. If the system meets one or more of the following conditions within a predefined time period, it is determined that the system is idle: no mouse operation, no keyboard operation, CPU occupation ratio is stable and tends to be flat or is lower than a predefined percentage. At this time, it is determined that the trigger condition is met.

The above trigger conditions are merely some examples. One of ordinary skill in the art would recognize many variations, alternatives, and modifications.

The running manner may include a running priority, and/or background/foreground running of the computer file.

The foreground running means that when the computer file is executed, an interface is displayed to show a running status of the computer file. The background running means that the computer file runs in background. Information prompts are provided to the user before the running of the computer file and after the running is completed. A running priority may be further configured for the computer file. For example, the following levels of priorities may be provided to the user according to a user task requirement: real-time, high, higher than standard, standard, lower than standard and low.

At block 309, the configuring sequence saves the configuration in form of running information. For example, the running information may include a first opening manner and a second opening manner, or may include a trigger condition and a running manner.

The running information may be saved in combination with the computer file or saved in a pre-configured running information storage area. The running information storage area saves the running information of all computer files. When a computer system requires the running information of a computer file, it may retrieve the corresponding running information from the computer file or the running information storage area.

In the example as shown in FIG. 3, it is firstly determined that whether the user selects to configure an opening manner for the computer file, and then it is determined that whether the user selects to configure a trigger condition and a running manner for the computer file. In a practical application, it is also possible to determine whether the user wants to configure a trigger condition and a running manner and then determine whether the user wants to configure an opening manner, i.e., blocks 307 and 308 may be performed before blocks 301-306.

Through the above block 301-309, the running information is configured for the computer file. After the running information of the computer file is configured, the computer system may parse the running information via a corresponding application program (e.g., the computer file running application 145) and open or execute the computer file according to the running information.

Hereinafter, the running of the computer file according to the parsed running information will be described.

FIG. 4 is a flowchart illustrating the running of the computer file according to the running information in accordance with an example of the present disclosure. FIG. 4 is a simplified diagram according to one embodiment of the present invention. This diagram is merely an example, which should not unduly limit the scope of the claims. One of ordinary skill in the art would recognize many variations, alternatives, and modifications.

As shown in FIG. 4, the method includes the following.

At block 401, running information of a computer file is parsed, wherein the running information includes a trigger condition and a running manner of the computer file, or includes a first opening manner and a second opening manner of the computer file.

In this example, suppose that the user configures the running information of the computer file through the computer file running application 145 in the user device 100 as shown in FIG. 1. Thus, the running information of the computer file may be parsed when the computer file running application 145 is started or when the computer file is to be opened.

For example, if the computer file is a non-executable computer file, the parsing may be initiated when the user is to open the non-executable computer file, e.g., double click the non-executable computer file. If the computer file is an executable computer file, the parsing may be initiated when the computer file running application 145 is started.

If the running information is saved in combination with the computer file, the running information may be obtained from the computer file. If the running information is saved in the running information storage area, the running information may be obtained from the running information storage area.

At block 402, the trigger condition and the running manner of the computer file are obtained, or the first opening manner and the second opening manner of the computer file are obtained.

For an executable computer file, the trigger condition and the running manner may be obtained through parsing the running information. For a non-executable computer file, the first opening manner and the second opening manner may be obtained through parsing the running information.

At block 403, the computer file is opened according to the first opening manner and the second opening manner is configured as a default opening manner of other computer files of a same file type with the computer file, or the computer file is executed according to the running manner if the trigger condition is met.

In this block, if the computer file is a non-executable computer file, the non-executable computer file is opened according to the first opening manner and the second opening manner is configured as a default opening manner of other non-executable computer files of the same file type with this non-executable computer file. A relationship between the second opening manner of other non-executable computer files and the file type may be recorded in a registry table. In this block, the same file type refers to the same file name extension. In other words, if two computer files have the same file name extension, it is determined that these two computer files are of the same file type.

If the computer file is an executable computer file, it is determined whether the trigger condition is met. If the trigger condition is met, the computer file is executed according to the running manner configured by the user.

Hereinafter, descriptions will be given with respect to several trigger conditions.
(1) If the trigger condition is computer startup, the computer file may be executed according to the running manner during the startup of the computer.
(2) If the trigger condition is related to time, a timer is configured according to the trigger condition. When the timer expires, the computer file is executed according to the running manner.
(3) If the trigger condition is related to monitoring of a folder, e.g., related to the size of a file in the folder, a monitoring thread may be created for monitoring the folder. If the monitoring thread determines that the size of a file in the folder exceeds a preconfigured threshold, the computer file is executed according to the running manner. The monitoring thread may also monitor other aspects of the folder, which is not restricted in the present disclosure.
(4) If the trigger condition is related to a system idle percentage of the computer system, a monitoring thread may be created for monitoring the system idle percentage. In one example, if the system idle percentage is lower than a predefined system idle threshold, the computer file is executed according to the running manner.
   In one example, if at least one of the following conditions is met, it is determined that the system idle percentage is lower than the predefined system idle threshold:
   a mouse operating ratio of the computer system is lower than a preconfigured mouse operating ratio;
   a keyboard operating ratio of the computer system is lower than a preconfigured keyboard operating ratio;
   a CPU occupation ratio of the computer system is stable and tends to be flat or is lower than a preconfigured CPU occupation ratio;
   a memory occupation ratio of the computer system is lower than a preconfigured memory occupation ratio; and
   an I/O occupation ratio of the computer system is lower than a preconfigured I/O occupation ratio.
(5) If the trigger condition is related to a log-off instruction, a restart instruction or a shut-down instruction of the user, a monitoring thread may be created to monitor whether a log-off instruction, a restart instruction or a shut-down instruction is received. If yes, the computer system keeps running to execute the computer file according to the running manner. After execution of computer file completes, the computer system executes the log-off instruction, the restart instruction or the shut-down instruction.
(6) If the trigger condition is related to a program close instruction, it is determined whether the program close instruction is received. If yes, the computer file is executed according to the running manner.

For example, if the program close instruction is a browser close instruction, the computer file is executed to perform at least one of the following operations: browser garbage cleaning up, script cleaning up, and navigation history cleaning up.

Through the above method as shown in FIG. 4, the computer file is opened or executed according to the running information parsed by the computer system. Thus, each computer file may be opened or executed independently and computer files of the same file type may be opened according to different opening manners, which reduces system resource occupation and increases file processing efficiency.

In accordance with the above method examples, an example of the present disclosure further provides an apparatus for running a computer file.

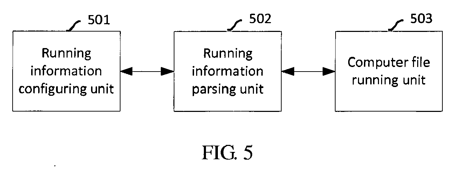

FIG. 5 is a schematic diagram illustrating a structure of an apparatus for running a computer file according to an example of the present disclosure. FIG. 5 is a simplified diagram according to one embodiment of the present invention. This diagram is merely an example, which should not unduly limit the scope of the claims. One of ordinary skill in the art would recognize many variations, alternatives, and modifications.

As shown in FIG. 5, the apparatus includes a running information configuring unit 501, a running information parsing unit 502 and a computer file running unit 503.

The running information configuring unit 501 is to configure running information for the computer file, wherein the running information includes a trigger condition and a running manner of the computer file, or includes a first opening manner and a second opening manner of the computer file.

The running information parsing unit 502 is to parse the running information of the computer file to obtain the trigger condition and the running manner of the computer file or obtain the first opening manner and the second opening manner of the computer file.

The computer file running unit 503 is to
open the computer file according to the first opening manner and configure the second opening manner as a default opening manner of other computer files of a same file type with the computer file; or
execute the computer file according to the running manner if the trigger condition is met.

Detailed functions of the above units may be obtained from the above method examples and will not be repeated herein.

The apparatus shown in FIG. 5 may be integrated in the user device 100 as shown in FIG. 1.

For example, the apparatus shown in FIG. 5 may be implemented as a plug-in program installed in user device 100, e.g., an ocx plug-in, or a dll plug-in, or a cab plug-in. The apparatus shown in FIG. 5 may also be encapsulated into an application program, such as the computer file running application 145 shown in FIG. 1.

In various examples of the present disclosure, running information may be configured for each computer file in a computer system and each computer file may be opened or executed independently according to its running information, which reduces system resource occupation and increases file processing efficiency.

What has been described and illustrated herein is a preferred example of the disclosure along with some of its variations. The terms, descriptions and figures used herein are set forth by way of illustration only and are not meant as limitations. Many variations are possible within the scope of the disclosure, which is intended to be defined by the following claims -- and their equivalents -- in which all terms are meant in their broadest reasonable sense unless otherwise indicated.

## Claims

1. A computer-implemented method for running a computer file, **characterized by** comprising:
parsing running information of a computer file, wherein running information is configured for each computer file in a computer system and each computer file is opened or executed independently according to its running information; if the computer file is an executable computer file, the running information comprises a trigger condition and a running manner of the executable computer file, and if the computer file is a non-executable computer file, the running information comprises a first opening manner and a second opening manner of the non-executable computer file;
if the computer file is the executable computer file,
obtaining the trigger condition and the running manner of the executable computer file; executing the executable computer file according to the running manner if the trigger condition is met; wherein the running manner of the executable computer file indicates a running priority of the executable computer file and/or a background/foreground running of the executable computer file; and
if the computer file is the non-executable computer file,
obtaining the first opening manner and the second opening manner of the non-executable computer file; and
opening the non-executable computer file according to the first opening manner and configuring the second opening manner as a default opening manner of other non-executable computer files of a same file type with the non-executable computer file.

2. The computer-implemented method of claim 1, wherein the trigger condition comprises any one or any combination of: computer startup, a preconfigured time arrives after computer startup, size of a file in a folder exceeds a preconfigured threshold, a computer system idle percentage is lower than a preconfigured resource threshold, a logoff instruction or a restart instruction or a shut-down instruction is received, and a program close instruction is received.

3. The computer-implemented method of claim 2, wherein the trigger condition is the preconfigured time arrives after computer startup;
the method further comprises:
determining whether the preconfigured time arrives after computer startup, if the preconfigured time arrives after computer startup, executing the executable computer file according to the running manner.

4. The computer-implemented method of claim 2, wherein the trigger condition is the size of a file in a folder exceeds the preconfigured threshold;
the method further comprises:
creating a monitoring thread to monitor the size of the file in the folder;
determining whether the size of the file in the folder exceeds the preconfigured threshold; and
if the size of the file in the folder exceeds the preconfigured threshold, executing the executable computer file according to the running manner.

5. The computer-implemented method of claim 2, wherein the trigger condition is the computer system idle percentage is lower than the preconfigured resource threshold;
the method further comprises:
creating a monitoring thread to monitor the computer system idle percentage;
determining whether the computer system idle percentage is lower than the preconfigured resource threshold; and
if the computer system idle percentage is lower than the preconfigured resource threshold, executing the executable computer file according to the running manner.

6. The computer-implemented method of claim 2, wherein the trigger condition is the logoff instruction or the restart instruction or the shut-down instruction is received;
the method further comprises:
determining whether the logoff instruction or the restart instruction or the shut-down instruction is received;
if the logoff instruction or the restart instruction or the shut-down instruction is received, keeping running of a computer system to execute the executable computer file according to the running manner; and
executing the logoff instruction or the restart instruction or the shut-down instruction after the execution of the executable computer file completes.

7. The computer-implemented method of claim 2, wherein the trigger condition is the program close instruction is received;
the method further comprises:
determining whether the program close instruction is received; and
if the program close instruction is received, executing the executable computer file according to the running manner.

8. An apparatus for running a computer file, comprising:
one or more processors;
a memory; and
one or more program units stored in the memory and to be executed by the one or more processors, **characterized in that** the one or more program units comprise:
a running information configuring unit, to configure running information for each computer file in a computer system, wherein each computer file is opened or executed independently according to the running information; if the computer file is an executable computer file, the running information comprises a trigger condition and a running manner of the executable computer file, and if the computer file is a non-executable computer file, the running information comprises a first opening manner and a second opening manner of the non-executable computer file;
a running information parsing unit, to parse the running information of the exécutable computer file to obtain the trigger condition and the running manner of the executable computer file if the computer file is the executable computer file; and obtain the first opening manner and the second opening manner of the non-executable computer file if the computer file is the non-executable computer file; and
a computer file running unit, to
open the non-executable computer file according to the first opening manner and configure the second opening manner as a default opening manner of other non-executable computer files of a same file type with the non-executable computer file if the computer file is the non-executable computer file; and
execute the executable computer file according to the running manner if the trigger condition is met and if the computer file is the executable computer file;
wherein the running manner of the executable computer file indicates a running priority of the executable computer file and/or a background/foreground running of the executable computer file.

9. The apparatus of claim 8, wherein the trigger condition comprises any one or any combination of: computer startup, a preconfigured time arrives after computer startup, size of a file in a folder exceeds a preconfigured threshold, a computer system idle percentage is lower than a preconfigured resource threshold, a logoff instruction or a restart instruction or a shut-down instruction is received, and a program close instruction is received.

10. The apparatus of claim 9, wherein the trigger condition is the preconfigured time arrives after computer startup;
the computer file running unit is further to:
determine whether the preconfigured time arrives after computer startup; and
execute the executable computer file according to the running manner if the preconfigured time arrives after computer startup.

11. The apparatus of claim 9, wherein the trigger condition is the size of a file in a folder exceeds the preconfigured threshold;
the computer file running unit is further to:
create a monitoring thread to monitor the size of the file in the folder;
determine whether the size of the file in the folder exceeds the preconfigured threshold; and
execute the executable computer file according to the running manner if the size of the file in the folder exceeds the preconfigured threshold.

12. The apparatus of claim 9, wherein the trigger condition is the computer system idle percentage is lower than the preconfigured resource threshold;
the computer file running unit is further to:
create a monitoring thread to monitor the computer system idle percentage;
determine whether the computer system idle percentage is lower than the preconfigured resource threshold; and
execute the executable computer file according to the running manner if the computer system idle percentage is lower than the preconfigured resource threshold.

13. The apparatus of claim 9, wherein the trigger condition is the logoff instruction or the restart instruction or the shut-down instruction is received;
the computer file running unit is further to:
determine whether the logoff instruction or the restart instruction or the shut-down instruction is received;
keep running of a computer system to execute the executable computer file according to the running manner if the logoff instruction or the restart instruction or the shut-down instruction is received; and
execute the logoff instruction or the restart instruction or the shut-down instruction after the execution of the executable computer file completes.

14. The apparatus of claim 9, wherein the trigger condition is the program close instruction is received;
the computer file running unit is further to:
determine whether the program close instruction is received; and
execute the executable computer file according to the running manner if the program close instruction is received.

15. A non-transitory computer-readable storage medium comprising a set of instructions for running a computer file, the set of instructions to direct at least one processor to perform acts of:
parsing running information of a computer file, wherein running information is configured for each computer file in a computer system and each computer file is opened or executed independently according to its running information; if the computer file is an executable computer file, the running information comprises a trigger condition and a running manner of the executable computer file, and if the computer file is a non-executable computer file, the running information comprises a first opening manner and a second opening manner of the non-executable computer file;
if the computer file is the executable computer file,
obtaining the trigger condition and the running manner of the executable computer file; executing the executable computer file according to the running manner if the trigger condition is met; wherein the running manner of the executable computer file indicates a running priority of the executable computer file and/or a background/foreground running of the executable computer file; and
if the computer file is the non-executable computer file,
obtaining the first opening manner and the second opening manner of the non-executable computer file; and
opening the non-executable computer file according to the first opening manner and configuring the second opening manner as a default opening manner of other non-executable computer files of a same file type with the non-executable computer file.

## Patentansprüche

1. Computer-implementiertes Verfahren zum Ablaufen einer Computerdatei, **dadurch gekennzeichnet, dass** es Folgendes umfasst:
Analysieren von Ablaufinformationen einer Computerdatei, wobei die Ablaufinformationen für jede Computerdatei in einem Computersystem konfiguriert sind und jede Computerdatei unabhängig voneinander gemäß ihren Ablaufinformationen geöffnet oder ausgeführt wird; falls die Computerdatei eine ausführbare Computerdatei ist, umfassen die Ablaufinformationen eine Auslösebedingung und eine Ablaufart der ausführbaren Computerdatei, und falls die Computerdatei eine nicht ausführbare Computerdatei ist, umfassen die Ablaufinformationen eine erste Öffnungsart und eine zweite Öffnungsart der nicht ausführbaren Computerdatei;
falls die Computerdatei die ausführbare Computerdatei ist,
Erhalten der Auslösebedingung und der Ablaufart der ausführbaren Computerdatei; Ausführen der ausführbaren Computerdatei gemäß der Ablaufart, falls die Auslösebedingung erfüllt ist; wobei die Ablaufart der ausführbaren Computerdatei eine Ablaufpriorität der ausführbaren Computerdatei und/oder einen Hintergrund-/Vordergrundablauf der ausführbaren Computerdatei anzeigt; und
falls die Computerdatei die nicht ausführbare Computerdatei ist,
Erhalten der ersten Öffnungsart und der zweiten Öffnungsart der nicht ausführbaren Computerdatei; und
Öffnen der nicht ausführbaren Computerdatei gemäß der ersten Öffnungsart und Konfigurieren der zweiten Öffnungsart als eine Standardöffnungsart von anderen nicht ausführbaren Computerdateien einer gleichen Dateiart wie die nicht ausführbare Computerdatei.

2. Computer-implementiertes Verfahren nach Anspruch 1, wobei die Auslösebedingung eines oder irgendeine Kombination der Folgenden umfasst: einen Computerstart, eine vorkonfigurierte Zeit nach dem Computerstart wird erreicht, die Größe einer Datei in einem Ordner übersteigt einen vorkonfigurierten Schwellenwert, ein Leerlaufprozentsatz des Computersystems ist niedriger als ein vorkonfigurierter Ressourcen-Schwellenwert, eine Logout-Anweisung oder eine Neustart-Anweisung oder eine Abschalt-Anweisung wird empfangen, und eine Anweisung zum Schließen des Programms wird empfangen.

3. Computer-implementiertes Verfahren nach Anspruch 2, wobei die Auslösebedingung darin besteht, dass die vorkonfigurierte Zeit nach dem Computerstart erreicht ist;
wobei das Verfahren ferner Folgendes umfasst:
Bestimmen, ob die vorkonfigurierte Zeit nach dem Computerstart erreicht ist, falls die vorkonfigurierte Zeit nach dem Computerstart erreicht ist, Ausführen der ausführbaren Computerdatei gemäß der Ablaufart.

4. Computer-implementiertes Verfahren nach Anspruch 2, wobei die Auslösebedingung darin besteht, dass die Größe einer Datei in einem Ordner den vorkonfigurierten Schwellenwert übersteigt;
wobei das Verfahren ferner Folgendes umfasst:
Erzeugen eines Überwachungs-Thread zum Überwachen der Größe der Datei in dem Ordner;
Bestimmen, ob die Größe der Datei in dem Ordner den vorkonfigurierten Schwellenwert übersteigt; und
falls die Größe der Datei in dem Ordner den vorkonfigurierten Schwellenwert übersteigt, Ausführen der ausführbaren Computerdatei gemäß der Ablaufart.

5. Computer-implementiertes Verfahren nach Anspruch 2, wobei die Auslösebedingung darin besteht, dass der Leerlaufprozentsatz des Computersystems niedriger ist als der vorkonfigurierte Schwellenwert;
wobei das Verfahren ferner Folgendes umfasst:
Erzeugen eines Überwachungs-Thread zum Überwachen des Leerlaufprozentsatzes des Computersystems;
Bestimmen, ob der Leerlaufprozentsatz des Computersystems niedriger als der vorkonfigurierte Ressourcen-Schwellenwert ist; und
falls der Leerlaufprozentsatz des Computersystems niedriger als der vorkonfigurierte Ressourcen-Schwellenwert ist, Ausführen der ausführbaren Computerdatei gemäß der Ablaufart.

6. Computer-implementiertes Verfahren nach Anspruch 2, wobei die Auslösebedingung darin besteht, dass die Logout-Anweisung oder die Neustart-Anweisung oder die Abschalt-Anweisung empfangen wird;
wobei das Verfahren ferner Folgendes umfasst:
Bestimmen, ob die Logout-Anweisung oder die Neustart-Anweisung oder die Abschalt-Anweisung empfangen wird;
falls die Logout-Anweisung oder die Neustart-Anweisung oder die Abschalt-Anweisung empfangen wird, weiteres Ablaufen eines Computersystems, um die ausführbare Computerdatei gemäß der Ablaufart auszuführen; und
Ausführen der Logout-Anweisung oder der Neustart-Anweisung oder der Abschalt-Anweisung, nachdem die Ausführung der ausführbaren Computerdatei abgeschlossen ist.

7. Computer-implementiertes Verfahren nach Anspruch 2, wobei die Auslösebedingung darin besteht, dass die Anweisung zum Schließen des Programms empfangen wird;
wobei das Verfahren ferner Folgendes umfasst:
Bestimmen, ob die Anweisung zum Schließen des Programms empfangen wird; und
falls die Anweisung zum Schließen des Programms empfangen wird, Ausführen der ausführbaren Computerdatei gemäß der Ablaufart.

8. Einrichtung zum Ablaufen einer Computerdatei, aufweisend:
einen oder mehrere Prozessor(en);
einen Speicher; und
eine oder mehrere Programmeinheit(en), die in dem Speicher gespeichert ist (sind) und von dem einen oder den mehreren Prozessor(en) auszuführen ist (sind), **dadurch gekennzeichnet, dass** die eine oder die mehreren Programmeinheit(en) Folgendes umfasst (umfassen):
eine Konfigurationseinheit für die Ablaufinformationen, um Ablaufinformationen für jede Computerdatei in einem Computersystem zu konfigurieren, wobei jede Computerdatei unabhängig voneinander gemäß den Ablaufinformationen geöffnet oder ausgeführt wird; falls die Computerdatei eine ausführbare Computerdatei ist, weisen die Ablaufinformationen eine Auslösebedingung und eine Ablaufart der ausführbaren Computerdatei auf, und falls die Computerdatei eine nicht ausführbare Computerdatei ist, weisen die Ablaufinformationen eine erste Öffnungsart und eine zweite Öffnungsart der nicht ausführbaren Computerdatei auf;
eine Analyseeinheit für die Ablaufinformationen, um die Ablaufinformationen der ausführbaren Computerdatei zu analysieren, um die Auslösebedingung und die Ablaufart der ausführbaren Computerdatei zu erhalten, falls die Computerdatei die ausführbare Computerdatei ist; und die erste Öffnungsart und die zweite Öffnungsart der nicht ausführbaren Computerdatei zu erhalten, falls die Computerdatei die nicht ausführbare Computerdatei ist; und
eine Computerdatei-Ablaufeinheit, um
die nicht ausführbare Computerdatei gemäß der ersten Öffnungsart zu öffnen und die zweite Öffnungsart als eine Standardöffnungsart von anderen nicht ausführbaren Computerdateien einer gleichen Dateiart wie die nicht ausführbare Computerdatei zu konfigurieren, falls die Computerdatei die nicht ausführbare Computerdatei ist; und
die ausführbare Computerdatei gemäß der Ablaufart auszuführen, falls die Auslösebedingung erfüllt ist und falls die Computerdatei die ausführbare Computerdatei ist;
wobei die Ablaufart der ausführbaren Computerdatei eine Ablaufpriorität der ausführbaren Computerdatei und/oder einen Hintergrund-/Vordergrundablauf der ausführbaren Computerdatei anzeigt.

9. Einrichtung nach Anspruch 8, wobei die Auslösebedingung eines oder irgendeine Kombination der Folgenden umfasst: einen Computerstart, eine vorkonfigurierte Zeit nach dem Computerstart ist erreicht, die Größe einer Datei in einem Ordner übersteigt einen vorkonfigurierten Schwellenwert, ein Leerlaufprozentsatz des Computersystems ist niedriger als ein vorkonfigurierter Ressourcen-Schwellenwert, eine Logout-Anweisung oder eine Neustart-Anweisung oder eine Abschalt-Anweisung wird empfangen, und eine Anweisung zum Schließen des Programms wird empfangen.

10. Einrichtung nach Anspruch 9, wobei die Auslösebedingung darin besteht, dass die vorkonfigurierte Zeit nach dem Computerstart erreicht ist;
wobei die Computerdatei-Ablaufeinheit ferner
bestimmen soll, ob die vorkonfigurierte Zeit nach dem Computerstart erreicht ist; und
die ausführbare Computerdatei gemäß der Ablaufart ausführen soll, falls die vorkonfigurierte Zeit nach dem Computerstart erreicht ist.

11. Einrichtung nach Anspruch 9, wobei die Auslösebedingung darin besteht, dass die Größe einer Datei in einem Ordner den vorkonfigurierten Schwellenwert übersteigt;
wobei die Computerdatei-Ablaufeinheit ferner
einen Überwachungs-Thread zum Überwachen der Größe der Datei in dem Ordner erzeugen soll;
bestimmen soll, ob die Größe der Datei in dem Ordner den vorkonfigurierten Schwellenwert übersteigt; und
die ausführbare Computerdatei gemäß der Ablaufart ausführen soll, falls die Größe der Datei in dem Ordner den vorkonfigurierten Schwellenwert übersteigt.

12. Einrichtung nach Anspruch 9, wobei die Auslösebedingung darin besteht, dass der Leerlaufprozentsatz des Computersystems niedriger ist als der vorkonfigurierte Ressourcen-Schwellenwert;
wobei die Computerdatei-Ablaufeinheit ferner
einen Überwachungs-Thread zum Überwachen des Leerlaufprozentsatzes des Computersystems erzeugen soll;
bestimmen soll, ob der Leerlaufprozentsatz des Computersystems niedriger als der vorkonfigurierte Ressourcen-Schwellenwert ist; und
die ausführbare Computerdatei gemäß der Ablaufart ausführen soll, falls der Leerlaufprozentsatz des Computersystems niedriger als der vorkonfigurierte Ressourcen-Schwellenwert ist.

13. Einrichtung nach Anspruch 9, wobei die Auslösebedingung darin besteht, dass die Logout-Anweisung oder die Neustart-Anweisung oder die Abschalt-Anweisung empfangen wird;
wobei die Computerdatei-Ablaufeinheit ferner
bestimmen soll, ob die Logout-Anweisung oder die Neustart-Anweisung oder die Abschalt-Anweisung empfangen wird;
ein Computersystem weiter ablaufen lassen soll, um die ausführbare Computerdatei gemäß der Ablaufart auszuführen, falls die Logout-Anweisung oder die Neustart-Anweisung oder die Abschalt-Anweisung empfangen wird; und
die Logout-Anweisung oder die Neustart-Anweisung oder die Abschalt-Anweisung ausführen soll, nachdem die Ausführung der ausführbaren Computerdatei abgeschlossen ist.

14. Einrichtung nach Anspruch 9, wobei die Auslösebedingung darin besteht, dass die Anweisung zum Schließen des Programms empfangen wird;
wobei die Computerdatei-Ablaufeinheit ferner
bestimmen soll, ob die Anweisung zum Schließen des Programms empfangen wird; und
die ausführbare Computerdatei gemäß der Ablaufart ausführen soll, falls die Anweisung zum Schließen des Programms empfangen wird.

15. Nicht vorübergehendes maschinenlesbares Speichermedium, aufweisend einen Satz von Anweisungen zum Ablaufen einer Computerdatei, wobei der Satz von Anweisungen mindestens einen Prozessor leitet, um folgende Aktionen auszuführen:
Analysieren von Ablaufinformationen einer Computerdatei, wobei die Ablaufinformationen für jede Computerdatei in einem Computersystem konfiguriert sind und jede Computerdatei unabhängig voneinander gemäß ihren Ablaufinformationen geöffnet oder ausgeführt wird; falls die Computerdatei eine ausführbare Computerdatei ist, umfassen die Ablaufinformationen eine Auslösebedingung und eine Ablaufart der ausführbaren Computerdatei, und falls die Computerdatei eine nicht ausführbare Computerdatei ist, umfassen die Ablaufinformationen eine erste Öffnungsart und eine zweite Öffnungsart der nicht ausführbaren Computerdatei;
falls die Computerdatei die ausführbare Computerdatei ist,
Erhalten der Auslösebedingung und der Ablaufart der ausführbaren Computerdatei; Ausführen der ausführbaren Computerdatei gemäß der Ablaufart, falls die Auslösebedingung erfüllt ist; wobei die Ablaufart der ausführbaren Computerdatei eine Ablaufpriorität der ausführbaren Computerdatei und/oder einen Hintergrund-/Vordergrundablauf der ausführbaren Computerdatei anzeigt; und
falls die Computerdatei die nicht ausführbare Computerdatei ist,
Erhalten der ersten Öffnungsart und der zweiten Öffnungsart der nicht ausführbaren Computerdatei; und
Öffnen der nicht ausführbaren Computerdatei gemäß der ersten Öffnungsart und Konfigurieren der zweiten Öffnungsart als eine Standardöffnungsart von anderen nicht ausführbaren Computerdateien einer gleichen Dateiart wie die nicht ausführbare Computerdatei.

## Revendications

1. Un procédé mis en oeuvre par ordinateur destiné à l'exécution d'un fichier informatique, **caractérisé en ce qu'**il comprend :
l'analyse d'informations d'exécution d'un fichier informatique, les informations d'exécution étant configurées pour chaque fichier informatique dans un système informatique et chaque fichier informatique étant ouvert ou exécuté indépendamment en fonction de ses informations d'exécution ; si le fichier informatique est un fichier informatique exécutable, les informations d'exécution contiennent une condition de déclenchement et un mode d'exécution du fichier informatique exécutable et si le fichier informatique est un fichier informatique non exécutable, les informations d'exécution contiennent un premier mode d'ouverture et un deuxième mode d'ouverture du fichier informatique non exécutable,
si le fichier informatique est le fichier informatique exécutable,
l'obtention de la condition de déclenchement et du mode d'exécution du fichier informatique exécutable, l'exécution du fichier informatique exécutable en fonction du mode d'exécution si la condition de déclenchement est satisfaite, le mode d'exécution du fichier informatique exécutable indiquant une priorité d'exécution du fichier informatique exécutable et/ou une exécution en arrière-plan/avant-plan du fichier informatique exécutable, et
si le fichier informatique est le fichier informatique non exécutable,
l'obtention du premier mode d'ouverture et du deuxième mode d'ouverture du fichier informatique non exécutable, et
l'ouverture du fichier informatique non exécutable en fonction du premier mode d'ouverture et la configuration du deuxième mode d'ouverture en tant que mode d'ouverture par défaut d'autres fichiers informatiques non exécutables d'un même type de fichier que le fichier informatique non exécutable.

2. Le procédé mis en oeuvre par ordinateur selon la revendication 1, dans lequel la condition de déclenchement comprend un élément quelconque parmi ou toute combinaison des éléments suivants : mise en route d'ordinateur, une heure préconfigurée arrive après la mise en route de l'ordinateur, la taille d'un fichier dans un dossier dépasse un seuil préconfiguré, un pourcentage en veille d'un système informatique est inférieur à un seuil de ressource préconfiguré, une instruction de déconnexion ou une instruction de redémarrage ou une instruction d'arrêt est reçue, et une instruction de fermeture de programme est reçue.

3. Le procédé mis en oeuvre par ordinateur selon la revendication 2, dans lequel la condition de déclenchement est, l'heure préconfigurée arrive après la mise en route de l'ordinateur,
le procédé comprend en outre :
la détermination si l'heure préconfigurée arrive après la mise en route de l'ordinateur ; si l'heure préconfigurée arrive après la mise en route de l'ordinateur, l'exécution du fichier informatique exécutable en fonction du mode d'exécution.

4. Le procédé mis en oeuvre par ordinateur selon la revendication 2, dans lequel la condition de déclenchement est, la taille d'un fichier dans un dossier dépasse le seuil préconfiguré,
le procédé comprend en outre :
la création d'un fil de surveillance destiné à la surveillance de la taille du fichier dans le dossier,
la détermination si la taille du fichier dans le dossier dépasse le seuil préconfiguré, et
si la taille du fichier dans le dossier dépasse le seuil préconfiguré, l'exécution du fichier informatique exécutable en fonction du mode d'exécution.

5. Le procédé mis en oeuvre par ordinateur selon la revendication 2, dans lequel la condition de déclenchement est, le pourcentage en veille d'un système informatique est inférieur au seuil de ressource préconfiguré,
le procédé comprend en outre :
la création d'un fil de surveillance destiné à la surveillance du pourcentage en veille d'un système informatique,
la détermination si le pourcentage en veille d'un système informatique est inférieur au seuil de ressource préconfiguré, et
si le pourcentage en veille d'un système informatique est inférieur au seuil de ressource préconfiguré, l'exécution du fichier informatique exécutable en fonction du mode d'exécution.

6. Le procédé mis en oeuvre par ordinateur selon la revendication 2, dans lequel la condition de déclenchement est, l'instruction de déconnexion ou l'instruction de redémarrage ou l'instruction d'arrêt est reçue,
le procédé comprend en outre :
la détermination si l'instruction de déconnexion ou l'instruction de redémarrage ou l'instruction d'arrêt est reçue,
si l'instruction de déconnexion ou l'instruction de redémarrage ou l'instruction d'arrêt est reçue, la poursuite de l'exécution d'un système informatique de façon à exécuter le fichier informatique exécutable en fonction du mode d'exécution, et
l'exécution de l'instruction de déconnexion ou de l'instruction de redémarrage ou de l'instruction d'arrêt après l'achèvement de l'exécution du fichier informatique exécutable.

7. Le procédé mis en oeuvre par ordinateur selon la revendication 2, dans lequel la condition de déclenchement est, l'instruction de fermeture de programme est reçue,
le procédé comprend en outre :
la détermination si l'instruction de fermeture de programme est reçue, et
si l'instruction de fermeture de programme est reçue, l'exécution du fichier informatique exécutable en fonction du mode d'exécution.

8. Un appareil destiné à l'exécution d'un fichier informatique, comprenant :
un ou plusieurs processeurs,
une mémoire, et
une ou plusieurs unités de programme conservées dans la mémoire et destinées à être exécutées par les un ou plusieurs processeurs, **caractérisées en ce que** les une ou plusieurs unités de programme comprennent :
une unité de configuration d'informations d'exécution destinée à la configuration d'informations d'exécution pour chaque fichier informatique dans un système informatique, dans lequel chaque fichier informatique est ouvert ou exécuté indépendamment en fonction des informations d'exécution ; si le fichier informatique est un fichier informatique exécutable, les informations d'exécution contiennent une condition de déclenchement et un mode d'exécution du fichier informatique exécutable et si le fichier informatique est un fichier informatique non exécutable, les informations d'exécution contiennent un premier mode d'ouverture et un deuxième mode d'ouverture du fichier informatique non exécutable,
une unité d'analyse d'informations d'exécution destinée à l'analyse des informations d'exécution du fichier informatique exécutable de façon à obtenir la condition de déclenchement et le mode d'exécution du fichier informatique exécutable si le fichier informatique est le fichier informatique exécutable, et de façon à obtenir le premier mode d'ouverture et le deuxième mode d'ouverture du fichier informatique non exécutable si le fichier informatique est le fichier informatique non exécutable, et
une unité d'exécution de fichier informatique destinée à
ouvrir un fichier informatique non exécutable en fonction du premier mode d'ouverture et à configurer le deuxième mode d'ouverture en tant que mode d'ouverture par défaut d'autres fichiers informatiques non exécutables d'un même type de fichier que le fichier informatique non exécutable si le fichier informatique est le fichier informatique non exécutable, et
exécuter le fichier informatique exécutable en fonction du mode d'exécution si la condition de déclenchement est satisfaite et si le fichier informatique est le fichier informatique exécutable,
le mode d'exécution du fichier informatique exécutable indiquant une priorité d'exécution du fichier informatique exécutable et/ou une exécution en arrière-plan/avant-plan du fichier informatique exécutable.

9. L'appareil selon la revendication 8, dans lequel la condition de déclenchement comprend un élément quelconque parmi ou toute combinaison des éléments suivants : mise en route d'ordinateur, une heure préconfigurée arrive après la mise en route de l'ordinateur, la taille d'un fichier dans un dossier dépasse un seuil préconfiguré, un pourcentage en veille d'un système informatique est inférieur à un seuil de ressource préconfiguré, une instruction de déconnexion ou une instruction de redémarrage ou une instruction d'arrêt est reçue et une instruction de fermeture de programme est reçue.

10. L'appareil selon la revendication 9, dans lequel la condition de déclenchement est, l'heure préconfigurée arrive après la mise en route de l'ordinateur,
l'unité d'exécution de fichier informatique est destinée en outre à :
déterminer si l'heure préconfigurée arrive après la mise en route de l'ordinateur, et
exécuter le fichier informatique exécutable en fonction du mode d'exécution si l'heure préconfigurée arrive après la mise en route de l'ordinateur.

11. L'appareil selon la revendication 9, dans lequel la condition de déclenchement est, la taille d'un fichier dans un dossier dépasse le seuil préconfiguré,
l'unité d'exécution de fichier informatique est destinée en outre à :
créer un fil de surveillance destiné à la surveillance de la taille du fichier dans le dossier,
déterminer si la taille du fichier dans le dossier dépasse le seuil préconfiguré, et
exécuter le fichier informatique exécutable en fonction du mode d'exécution si la taille du fichier dans le dossier dépasse le seuil préconfiguré.

12. L'appareil selon la revendication 9, dans lequel la condition de déclenchement est, le pourcentage en veille d'un système informatique est inférieur au seuil de ressource préconfiguré,
l'unité d'exécution de fichier informatique est destinée en outre à :
créer un fil de surveillance destiné à la surveillance du pourcentage en veille d'un système informatique,
déterminer si le pourcentage en veille d'un système informatique est inférieur au seuil de ressource préconfiguré, et
exécuter le fichier informatique exécutable en fonction du mode d'exécution si le pourcentage en veille d'un système informatique est inférieur au seuil de ressource préconfiguré.

13. L'appareil selon la revendication 9, dans lequel la condition de déclenchement est, l'instruction de déconnexion ou l'instruction de redémarrage ou l'instruction d'arrêt est reçue,
l'unité d'exécution de fichier informatique est destinée en outre à :
déterminer si l'instruction de déconnexion ou l'instruction de redémarrage ou l'instruction d'arrêt est reçue,
poursuivre l'exécution d'un système informatique de façon à exécuter le fichier informatique exécutable en fonction du mode d'exécution si l'instruction de déconnexion ou l'instruction de redémarrage ou l'instruction d'arrêt est reçue, et
exécuter l'instruction de déconnexion ou l'instruction de redémarrage ou l'instruction d'arrêt après l'achèvement de l'exécution du fichier informatique exécutable.

14. L'appareil selon la revendication 9, dans lequel la condition de déclenchement est, l'instruction de fermeture de programme est reçue,
l'unité d'exécution de fichier informatique est destinée en outre à :
déterminer si l'instruction de fermeture de programme est reçue, et
exécuter le fichier informatique exécutable en fonction du mode d'exécution si l'instruction de fermeture de programme est reçue.

15. Un support à mémoire lisible par ordinateur non transitoire contenant un ensemble d'instructions destinées à l'exécution d'un fichier informatique, l'ensemble d'instructions étant destiné à diriger au moins un processeur de façon à exécuter les étapes suivantes :
l'analyse d'informations d'exécution d'un fichier informatique, les informations d'exécution étant configurées pour chaque fichier informatique dans un système informatique et chaque fichier informatique étant ouvert ou exécuté indépendamment en fonction de ses informations d'exécution ; si le fichier informatique est un fichier informatique exécutable, les informations d'exécution contiennent une condition de déclenchement et un mode d'exécution du fichier informatique exécutable et si le fichier informatique est un fichier informatique non exécutable, les informations d'exécution contiennent un premier mode d'ouverture et/ou un deuxième mode d'ouverture du fichier informatique non exécutable,
si le fichier informatique est le fichier informatique exécutable,
l'obtention de la condition de déclenchement et du mode d'exécution du fichier informatique exécutable, l'exécution du fichier informatique exécutable en fonction du mode d'exécution si la condition de déclenchement est satisfaite, le mode d'exécution du fichier informatique exécutable indiquant une priorité d'exécution du fichier informatique exécutable et/ou une exécution en arrière-plan/avant-plan du fichier informatique exécutable, et
si le fichier informatique est le fichier informatique non exécutable,
l'obtention du premier mode d'ouverture et du deuxième mode d'ouverture du fichier informatique non exécutable, et
l'ouverture du fichier informatique non exécutable en fonction du premier mode d'ouverture et la configuration du deuxième mode d'ouverture en tant que mode d'ouverture par défaut d'autres fichiers informatiques non exécutables d'un même type de fichier que le fichier informatique non exécutable.
